# EUROPÄISCHE PATENTSCHRIFT

(11) **EP 1 905 530 B1**
(45) Veröffentlichungstag und Bekanntmachung des Hinweises auf die Patenterteilung: **05.06.2013**
(21) Anmeldenummer: 06020566.3
(22) Anmeldetag: 29.09.2006
(51) Int. Cl.: B23K 26/14

(54) **Laserbearbeitungskopf mit einer Dichtungsanordnung**
Laser welding head with a sealing arrangement
Tête d'usinage au laser avec un dispositif de joint.

(43) Veröffentlichungstag der Anmeldung: 02.04.2008
(73) Patentinhaber: TRUMPF Werkzeugmaschinen GmbH + Co. KG, 71254 Ditzingen (DE)
(72) Erfinder: Braun, Jens, 70839 Gerlingen (DE); Vees, Dominik, 72072 Tübingen (DE)
(74) Vertreter: Kohler Schmid Möbus

(56) Entgegenhaltungen:
- DE-A1- 4 120 790
- DE-A1- 4 326 254
- DE-U1- 9 421 369
- GB-A- 1 477 710
- US-A1- 2003 178 792

## Beschreibung

Die vorliegende Erfindung betrifft einen Laserbearbeitungskopf mit einer Dichtungsanordnung zur Abdichtung zwischen zwei Bauteilen des Laserbearbeitungskopfes.

Es ist allgemein bekannt, separate Dichtungen zwischen derartigen Bauteilen zu verwenden, siehe z.B. DE-U-9 421 369. Derartige Dichtungen sind in der Regel elastomere Dichtungen, wie beispielsweise O-Ringe. In der Praxis hat sich aber gezeigt, dass sich der Einsatz separater Dichtungen bei der Demontage und anschließenden Montage des Laserbearbeitungskopfes bei Wartungsarbeiten nicht bewährt hat. Entweder wird die alte, meist nicht mehr intakte Dichtung trotzdem nochmals verwendet oder es wird vergessen, die Dichtung einzubauen. Es kann auch vorkommen, dass eine neue Dichtung fehlerhaft eingebaut wird. Darüberhinaus besitzen elastomere Dichtungen den Nachteil, dass die thermische Belastbarkeit derartiger Dichtungen eher gering ist.

Um diese Probleme zu vermeiden, ist es auch bekannt, zur Vermeidung einer separaten Dichtung Bauteile mit planen Flächen zu verwenden. Die bedeutet aber einen teuren und erhöhten Fertigungsaufwand.

Insbesondere bei Laserschneidköpfen muss ein Isolator aus einem kapazitiv isolierenden Werkstoff, wie Keramik, einer Sensoranordnung mit einem weiteren Bauteil des Laserschneidkopfes aus Metall weitgehend gasdicht lösbar verbunden werden. Eine derartige Sensoranordnung ist beispielsweise durch die DE19906442 bekannt geworden. Die Dichtwirkung zwischen der metallischen Fläche und der Keramikfläche ist abhängig von der Oberflächenbeschaffenheit der Flächen (Eben- und Rauheit). Eine Dichtwirkung ohne separate Dichtung lässt sich in diesem Fall nur schwer erreichen.

Der Erfindung liegt die Aufgabe zugrunde, einen Laserbearbeitungskopf mit einer einfach aufgebaute, kostengünstige und dennoch zuverlässige Dichtungsanordnung vorzuschlagen.

Diese Aufgabe wird erfindungsgemäß durch einen Laserbearbeitungskopf mit einer Dichtungsanordnung mit allen Merkmalen des Anspruchs 1 gelöst.

Mit einen Dichtlippe , welche die Anlagefläche dieses Bauteils in Richtung des anderen Bauteils überragt, wirkt sich die Verformung der Dichtlippe besonders gut dichtend aus.

Wenn sich über der Dichtlippe eine Ausnehmung oder Einkerbung in dem Bauteil befindet, erhöht sich die Federwirkung der Dichtlippe. Die Dichtlippe kann sich besonders gut federnd anlegen und/oder elastisch verformen.

Die Dichtlippe weist eine ringförmige Anlagefläche oder Anlagekante für eine Gegenfläche des anderen Bauteils auf. Daher ist es ausreichend, diese Gegenfläche mit hoher Qualität zu bearbeiten. Dies reduziert den Fertigungsaufwand.

Ein Ausführungsbeispiel der Erfindung ist in der Zeichnung schematisch dargestellt und wird nachfolgend mit Bezug zu den Figuren der Zeichnung näher erläutert. Es zeigt:
- **Figur 1**: eine vereinfachte prinzipielle Darstellung einer Dichtungsanordnung vor dem endgültigen Zusammenbau des erfindungsgemäßen Laserbearbeitungskopfes bzw. vor der Laserbearbeitung;
- **Figur 2**: eine vereinfachte prinzipielle Darstellung der Dichtungsanordnung gemäß Figur 1 nach dem endgültigen Zusammenbau des erfindungsgemäßen Laserbearbeitungskopfes bzw. während der Laserbearbeitung;
- **Figur 3**: Bauteile eines erfindungsgemäßen Laserbearbeitungskopfes nach dem Zusammenbau im Längsschnitt.

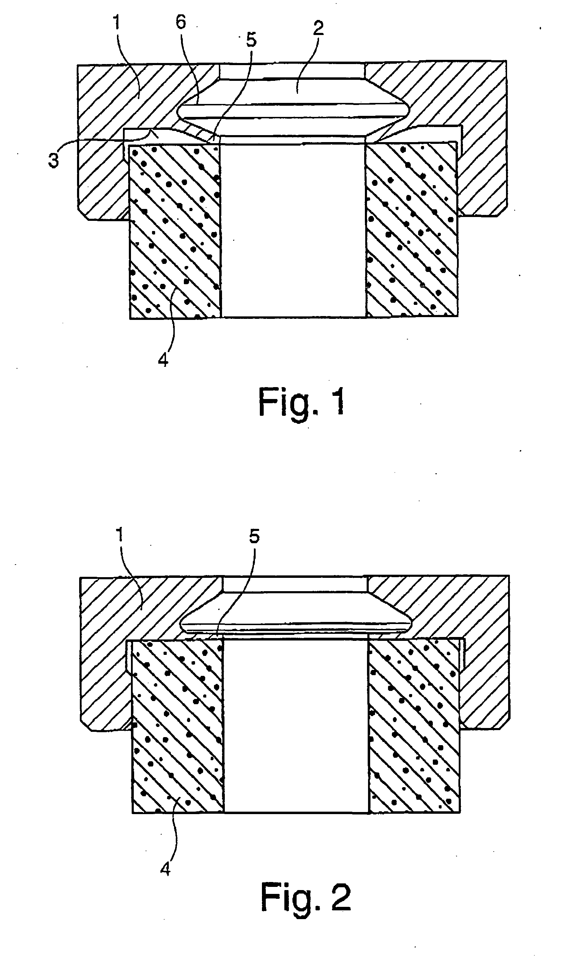

Aus der Figur 1 ist ersichtlich, dass ein erstes aus Metall hergestelltes Bauteil 1 eines Laserbearbeitungskopfes eine Durchgangsbohrung 2 für den Laserstrahl und ein Bearbeitungsgas aufweist. Weiterhin besitzt das Bauteil 1 eine Anlagefläche 3 für ein weiteres Bauteil, einen Isolator 4 aus Keramik, der ebenfalls mit einer Durchgangsbohrung ausgestattet ist. Die Bauteile 1 und 4 sind gasdicht zu verbinden. Daher ist an dem Bauteil 1 eine Dichtlippe 5 angeformt, die einen Teil der Anlagefläche 3 für den Isolator 4 bildet. Die Dichtlippe 5 ist in das Bauteil 1 integriert. Ein Randbereich der Durchgangsbohrung 2 ist mit einer Einkerbung oder Ausnehmung 6 versehen, so dass die Dichtlippe 5 eine Elastizität aufweist. Für die Abdichtung gegenüber dem Isolator 4 ragt die Dichtlippe 5 über die Anlagefläche 3 in Richtung des Isolators 4 hinaus. Figur 1 zeigt den Zustand der Dichtlippe 5 vor der Verformung. Der Isolator 4 liegt an der Dichtlippe 5 leicht an. Die Dichtlippe 5 kann nach oben gedrückt werden.

Wie in Figur 2 gezeigt, sind die Bauteile 1 und 4 derart gegeneinander gedrückt, dass die Dichtlippe 5 verformt ist. Es ist zu erkennen, dass die Dichtlippe 5 so gestaltet ist, dass sie nur auf einer kleinen definierbaren Ringfläche dichtet und vorgespannt ist. Die Bauteile 1 und 4 sind nunmehr gasdicht verbunden.

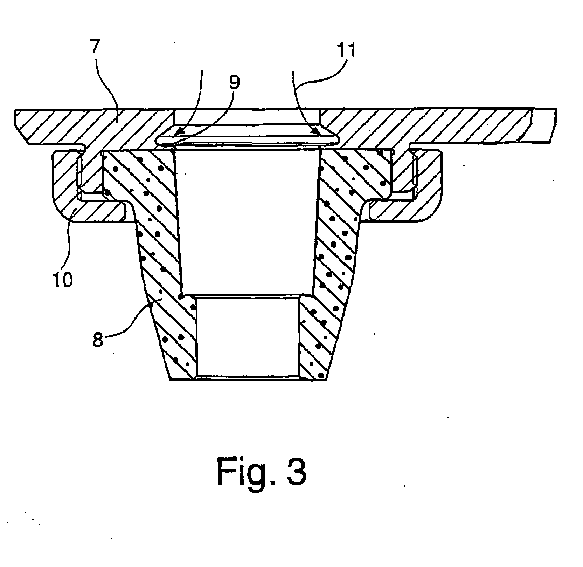

Ein konkretes Anwendungsbeispiel der Erfindung zeigt Figur 3. Ein erstes Bauteil 7 eines Laserschneidkopfes ist mit einem Isolator 8 gasdicht verbunden. Das Bauteil 7 kann an weiteren Elementen der Laserschneidmaschine befestigt werden. An dem freien Ende des Isolators 8 kann eine Laserschneiddüse aufgenommen werden. Eine metallische Dichtlippe 9 des Bauteils 7 wurde durch den Einbau des Isolators 8 elastisch verformt. Aufgrund der sich aus der Ausgestaltung der Dichtlippe 9 ergebenden Vorspannung resultiert eine Dichtwirkung zwischen den Bauteilen. Zur lösbaren Verbindung der Bauteile ist eine Überwurfmutter 10 vorgesehen. Zur Unterstützung der Dichtwirkung wird die Gasströmung des Bearbeitungsgases genutzt, die durch Strömungspfeile 11 angedeutet ist.

### BEZUGSZEICHENLISTE

- 1: Bauteil
- 2: Durchgangsbohrung
- 3: Anlagefläche
- 4: Isolator
- 5: Dichtlippe
- 6: Ausnehmung
- 7: Bauteil
- 8: Isolator
- 9: Dichtlippe
- 10: Überwurfmutter
- 11: Gasströmung

## Patentansprüche

1. Laserbearbeitungskopf mit einem eine Durchgangsbohrung (2) für einen Laserstrahl und ein Bearbeitungsgas aufweisenden ersten Bauteil (7) aus Metall, an dem ein eine Durchgangsbohrung für den Laserstrahl und das Bearbeitungsgas aufweisendes zweites Bauteil in Form eines Isolators (8) aus Keramik oder Kunststoff befestigt ist, welcher ein zur Aufnahme einer Laserschneiddüse ausgebildetes freies Ende aufweist, sowie mit einer Dichtungsanordnung zur gasdichten Abdichtung zwischen den beiden Bauteilen (7, 8), **dadurch gekennzeichnet dass**,
das erste Bauteil (7) aus Metall eine Anlagefläche (3) für den Isolator (8) und eine angeformte, elastisch verformbare Dichtlippe (9) aufweist, die über die Anlagefläche (3) in Richtung auf den Isolator (8) hinausragt und eine ringförmige Anlagefläche oder Anlagekante aufweist, an der der Isolator (8) mit einer Gegenfläche gasdicht anliegt.

2. Laserbearbeitungskopf nach Anspruch 1, **dadurch gekennzeichnet, dass** das erste Bauteil (7) aus Metall über der Dichtlippe (9) eine Ausnehmung oder Einkerbung (6) aufweist.

## Claims

1. Laser processing head comprising
a first component (7) of metal, which has a through hole (2) for a laser beam and a processing gas and to which a second component is fixed, which is designed as an insulator (8) of ceramic or plastic material, has a through hole for the laser beam and the processing gas, and has a free end designed to receive a laser cutting nozzle; and
a sealing arrangement for gas-tight sealing between the two components (7, 8),
**characterized in that** the first component (7) of metal comprises a contact surface (3) for the insulator (8) and an integral elastically deformable sealing lip (9), which projects beyond the contact surface (3) towards the insulator (8) and has an annular contact surface or contact edge on which a counter-surface of the insulator (8) abuts in a gas-tight manner.

2. Laser processing head according to claim 1, **characterized in that** the first component (7) of metal has a recess or notch (6) above the sealing lip (9).

## Revendications

1. Tête d'usinage au laser avec un premier composant (7) en métal qui comporte un trou de passage (2) pour un faisceau laser et un gaz d'usinage, sur lequel est fixé un deuxième composant sous la forme d'un isolateur (8) en céramique ou matière plastique qui comporte un trou de passage pour le faisceau laser et le gaz d'usinage et présente une extrémité libre conçue pour recevoir une buse de découpe au laser, ainsi qu'avec un dispositif d'étanchéité pour assurer l'étanchéité au gaz entre les deux composants (7, 8),
**caractérisée en ce que** le premier composant (7) en métal présente une surface d'appui (3) pour l'isolateur (8) et une lèvre d'étanchéité (9) déformable élastiquement formée sur lui qui dépasse de la surface d'appui (3) en direction de l'isolateur (8) et présente une surface d'appui ou un bord d'appui annulaire sur laquelle ou lequel l'isolateur (8) s'appuie de manière étanche au gaz par une surface complémentaire.

2. Tête d'usinage au laser selon la revendication 1, **caractérisée en ce que** le premier composant (7) en métal présente un évidement ou une entaille (6) au-dessus de la lèvre d'étanchéité (9).
